# EUROPÄISCHE PATENTSCHRIFT

(11) **EP 3 209 900 B1**
(45) Veröffentlichungstag und Bekanntmachung des Hinweises auf die Patenterteilung: **31.03.2021**
(21) Anmeldenummer: 15823494.8
(22) Anmeldetag: 23.10.2015
(51) Int. Cl.: F16F 15/14, F16F 15/30

(54) **SCHWUNGRAD**
FLYWHEEL
VOLANT D'INERTIE

(30) Priorität: 23.10.2014 DE 102014221591
(43) Veröffentlichungstag der Anmeldung: 30.08.2017
(73) Patentinhaber: Schaeffler Technologies AG & Co. KG, 91074 Herzogenaurach (DE)
(72) Erfinder: HUBER, Lionel, F-67410 Drusenheim (FR)
(86) Internationale Anmeldenummer: PCT/DE2015/200483
(87) Internationale Veröffentlichungsnummer: WO 2016/062313

(56) Entgegenhaltungen:
- EP-A2- 2 600 031
- DE-A1- 4 328 927
- DE-A1-102006 028 556
- DE-A1-102008 005 138
- FR-A1- 2 986 591
- FR-A1- 2 986 591

## Beschreibung

Die Erfindung betrifft ein Schwungrad, insbesondere für einen Antriebsstrang eines brennkraftmaschinengetriebenen Kraftfahrzeugs, das Schwungrad aufweisend ein erstes Schwungradteil, ein zweites Schwungradteil und eine zwischen dem ersten Schwungradteil und dem zweiten Schwungradteil wirksame Axialfedereinrichtung.

Aus der DE 199 59 962 A1 ist eine Drehmomentübertragungseinrichtung bekannt zur Verbindung einer Kurbelwelle einer Brennkraftmaschine mit einem Abtriebsteil eines Antriebsstrangs, insbesondere einer Reibungskupplung oder einer Flüssigkeitskupplung wie Föttinger-Kupplung oder hydrodynamischer Wandler, zumindest bestehend aus einem axial flexiblen, mit der Kurbelwelle verbindbaren ersten Scheibenteil, an dem an einem radial äußeren Bereich ein ringförmiges Bauteil, das die Verbindung zum Abtriebsteil bildet, verbunden ist, bei der das erste Scheibenteil mit dem ringförmigen Bauteil mittels eines zweiten, axial elastischen Scheibenteils verspannt ist, um über den gesamten genutzten Drehzahlbereich eines Fahrzeugs eine Verbesserung der von der Kurbelwelle eingetragenen axialen Schwingungen zu erreichen.

Aus der DE 10 2006 028 556 A1 ist eine Drehmomentübertragungseinrichtung bekannt im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung, bei der die Laufrollen jeweils mindestens einen Bund aufweisen, der unter Fliehkrafteinwirkung auf die Pendelmasse in axialer Richtung zwischen der Pendelmasse und der Pendelmassenträgereinrichtung angeordnet ist, um die Drehmomentübertragungseinrichtung im Hinblick auf die im Betrieb auftretende Geräuschentwicklung zu optimieren Aus dem Dokument DE4328927 ist ein Schwungrad mit den Merkmalen des Oberbegriffs des Anspruchs 1 bekannt.

Der Erfindung liegt die Aufgabe zugrunde, ein eingangs genanntes Schwungrad baulich und/oder funktional zu verbessern. Insbesondere soll eine axiale Beweglichkeit ermöglicht sein. Insbesondere sollen Verformungen eines an das Schwungrad anschließenden Aggregats ausgleichbar sein. Insbesondere sollen axiale Schwingungen dämpfbar sein. Insbesondere sollen kritische Spannungen verhindert werden. Insbesondere soll eine Tilgung von Drehschwingungen ermöglicht sein.

Die Aufgabe wird gelöst mit einem Schwungrad, insbesondere für einen Antriebsstrang eines brennkraftmaschinengetriebenen Kraftfahrzeugs, das Schwungrad aufweisend ein erstes Schwungradteil, ein zweites Schwungradteil und eine zwischen dem ersten Schwungradteil und dem zweiten Schwungradteil wirksame Axialfedereinrichtung, wobei das Schwungrad eine Fliehkraftpendeleinrichtung mit einem um die Drehachse drehbaren Pendelmasseträgerteil und wenigstens einer an dem Pendelmasseträgerteil unter Fliehkrafteinwirkung entlang einer Pendelbahn verlagerbar angeordnete Pendelmasse aufweist.

Das Schwungrad kann eine scheibenartige Form aufweisen. Das Schwungrad kann zur Reduzierung von Drehungleichförmigkeiten und/oder Drehschwingungen dienen. Das Schwungrad kann ein vorgegebenes Massenträgheitsmoment aufweisen. Das Schwungrad kann zur Anordnung in einem Antriebsstrang eines Kraftfahrzeugs dienen. Der Antriebsstrang kann eine Brennkraftmaschine aufweisen. Die Brennkraftmaschine kann eine Kurbelwelle aufwiesen. Der Antriebsstrang kann einen hydrodynamischen Wandler aufweisen. Der Antriebsstrang kann ein Getriebe aufweisen. Der Antriebsstrang kann ein stufenloses Getriebe aufweisen. Der Antriebsstrang kann wenigstens ein antreibbares Fahrzeugrad aufweisen. Das Schwungrad kann eine Drehachse aufweisen. Das erste Schwungradteil und das zweite Schwungradteil können zusammen um die Drehachse drehbar sein. Das erste Schwungradteil und das zweite Schwungradteil können entlang der Drehachse relativ zueinander begrenzt axial elastisch verlagerbar sein. Das erste Schwungradteil und das zweite Schwungradteil können relativ zueinander begrenzt elastisch verkippbar sein.

Das erste Schwungradteil kann zur Verbindung mit einer Kurbelwelle einer Brennkraftmaschine dienen. Das erste Schwungradteil kann eine nabenartige Form aufweisen. Das erste Schwungradteil kann einen ersten Verbindungsabschnitt zur Verbindung mit der Kurbelwelle aufweisen. Der erste Verbindungsabschnitt des ersten Schwungradteils kann Ausnehmungen, insbesondere Durchgangslöcher, zur Aufnahme von Verbindungselementen aufweisen. Das erste Schwungradteil kann einen zweiten Verbindungsabschnitt zur Verbindung mit der Axialfedereinrichtung aufweisen. Der zweite Verbindungsabschnitt des ersten Schwungradteils kann Aufnahmen, insbesondere Gewinde, zur Aufnahme von Verbindungselementen, wie Schrauben, aufweisen.

Das zweite Schwungradteil kann zur Verbindung mit einem Anschlussaggregat, insbesondere einem hydrodynamischen Wandler oder einem stufenlosen Getriebe, dienen. Das zweite Schwungradteil kann eine ringartige oder ringscheibenartige Form aufweisen. Das zweite Schwungradteil kann einen L-förmigen Querschnitt aufweisen. Das zweite Schwungradteil kann einen Verbindungsabschnitt zur Verbindung mit der Axialfedereinrichtung und mit dem Anschlussaggregat aufweisen. Der Verbindungsabschnitt des zweiten Schwungradteils kann Ausnehmungen, insbesondere Durchgangslöcher, zur Aufnahme von Verbindungselementen, wie Schrauben, aufweisen.

Die Axialfedereinrichtung kann ein ringscheibenförmiges Federelement aufweisen. Das Federelement kann eine schalenartige Form aufweisen. Das Federelement kann einen stufigen Querschnitt aufweisen. Das Federelement kann einen Innenrandabschnitt und einen Außenrandabschnitt aufweisen. Der Innenrandabschnitt kann mit dem ersten Schwungradteil fest verbunden, insbesondere verschraubt, sein. Der Außenrandabschnitt kann mit dem zweiten Schwungradteil fest verbunden, insbesondere verschraubt, sein. Die Axialfedereinrichtung kann einen ersten Verbindungsabschnitt zur Verbindung mit ersten Schwungradteil aufweisen. Der erste Verbindungsabschnitt der Axialfedereinrichtung kann Ausnehmungen, insbesondere Durchgangslöcher, zur Aufnahme von Verbindungselementen, wie Schrauben, aufweisen. Die Axialfedereinrichtung kann einen zweiten Verbindungsabschnitt zur Verbindung mit zweiten Schwungradteil aufweisen. Der zweite Verbindungsabschnitt der Axialfedereinrichtung kann Ausnehmungen, insbesondere Durchgangslöcher, zur Aufnahme von Verbindungselementen, wie Schrauben, aufweisen.

Die Fliehkraftpendeleinrichtung kann dazu dienen, Drehschwingungen zu tilgen. Das Pendelmasseträgerteil kann eine ringscheibenartige Form aufweisen. Die wenigstens eine Pendelmasse kann zwischen zwei Endlagen verlagerbar sein. Die wenigstens eine Pendelmasse kann zur Drehachse exzentrisch angeordnet sein. Die wenigstens eine Pendelmasse kann eine bogenartige Form aufweisen. Die wenigstens eine Pendelmasse kann mit dem Pendelmasseträgerteil bifilar verbunden sein. Die wenigstens eine Pendelmasse kann an dem Pendelmasseträgerteil mithilfe von Pendelrollen gelagert sein. Das Pendelmasseträgerteil kann Ausnehmungen zur Aufnahme der Pendelrollen aufweisen. Die wenigstens eine Pendelmasse kann Ausnehmungen zur Aufnahme der Pendelrollen aufweisen Die Ausnehmungen der wenigstens einen Pendelmasse und/oder des Pendelmasseträgerteils können jeweils eine nierenartige Form aufweisen. Die wenigstens eine Pendelmasse kann einteilig oder mehrteilig sein. Mehrere Pendelmasseteile können miteinander fest verbunden, insbesondere vernietet, sein. Pendelmasseteile einer mehrteiligen Pendelmasse können beidseits des Pendelmasseträgerteils angeordnet sein. Die Fliehkraftpendeleinrichtung kann mehrere, beispielsweise vier, Pendelmassen aufweisen.

Die Fliehkraftpendeleinrichtung kann an dem ersten Schwungradteil angeordnet sein. Die Axialfedereinrichtung kann mit dem ersten Schwungradteil fest verbunden, insbesondere verschraubt, sein. Das Pendelmasseträgerteil kann zusammen mit der Axialfedereinrichtung mit dem ersten Schwungradteil fest verbunden, insbesondere verschraubt, sein.

Das zweite Schwungradteil kann Ausnehmungen zur Aufnahme von Verbindungselementen aufweisen. Die Ausnehmungen können axial zugänglich sein. Die Ausnehmungen des zweiten Schwungradteils können zumindest im Wesentlichen radial außerhalb der Fliehkraftpendeleinrichtung angeordnet sein. Das Pendelmasseträgerteil und/oder die wenigstens eine Pendelmasse können/kann mit den Ausnehmungen des zweiten Schwungradteils korrespondierende Ausnehmungen aufweisen.

Das Schwungrad weist einen Zahnkranz und/oder Geberring auf. Der Zahnkranz und/oder Geberring ist an dem Pendelmassenträgerteil angeordnet. Der Zahnkranz und/oder Geberring kann an dem Pendelmasseträgerteil radial außenseitig angeordnet sein.

Das zweite Schwungradteil kann einen Abschnitt aufweisen, der die Fliehkraftpendeleinrichtung radial außenseitig umgreift. Dieser Abschnitt kann als Berstschutz dienen.

Das Pendelmasseträgerteil kann einen Abschnitt aufweisen, der die Verbindung zu dem Anschlussaggregat radial außenseitig umgreift.

Zusammenfassend und mit anderen Worten dargestellt ergibt sich somit durch die Erfindung unter anderem eine Drive Plate mit Fliehkraftpendel. Eine Drive Plate mit flexiblem Blech kann mit einem Fliehkraftpendel kombiniert werden. An der Drive Plate selbst können noch weitere Funktionen addiert werden wie zum Beispiel Zahnkranz oder Geberring. Durchgangslöcher können an einem Fliehkraftpendel-Flansch vorhanden sein, um einen Durchgang von Schrauben zum Verbinden beispielsweise eines Wandler zu gewährleisten. Gegebenenfalls können auch die Pendelmasse ausgespart werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist Die Erfindung ist durch die anhängenden Ansprüche definiert.

Das erfindungsgemäße Schwungrad ermöglicht eine axiale Beweglichkeit. Verformungen eines an das Schwungrad anschließenden Aggregats sind ausgleichbar. Axiale Schwingungen sind dämpfbar. Kritische Spannungen werden verhindert. Eine Tilgung von Drehschwingungen ist ermöglicht.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: ein nicht erfindungsgemäßes axial flexibles Schwungrad mit einer Fliehkraftpendeleinrichtung für einen Antriebsstrang eines brennkraftmaschinengetriebenen Kraftfahrzeugs und
- Fig. 2: ein erfindungsgemäßes axial flexibles Schwungrad mit einer Fliehkraftpendeleinrichtung für einen Antriebsstrang eines brennkraftmaschinengetriebenen Kraftfahrzeugs.

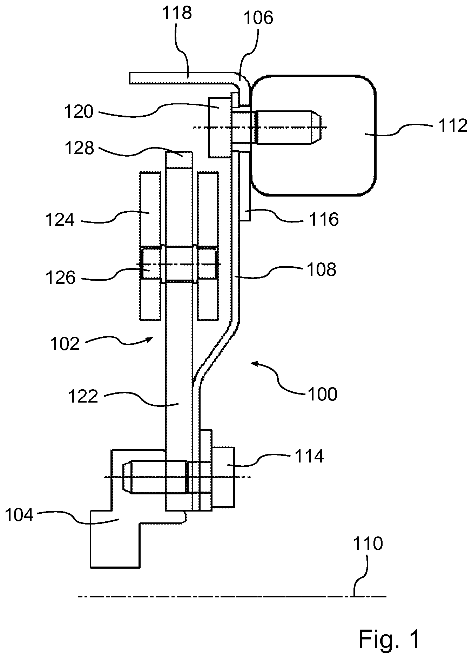

Fig. 1 zeigt ein axial flexibles Schwungrad 100 mit einer Fliehkraftpendeleinrichtung 102 für einen Antriebsstrang eines brennkraftmaschinengetriebenen Kraftfahrzeugs.

Das Schwungrad 100 weist ein erstes Schwungradteil 104, ein zweites Schwungradteil 106 und ein zwischen dem ersten Schwungradteil 104 und dem zweiten Schwungradteil 106 angeordnetes, axial wirksames Federelement 108 auf.

Das Schwungrad 100 dient zur Reduzierung von periodischen Drehungleichförmigkeiten einer Brennkraftmaschine. Das Schwungrad 100 weist eine scheibenartige Form sowie eine Drehachse 110 auf, um die das erste Schwungradteil 104 und das zweite Schwungradteil 106 zusammen drehbar und entlang der das erste Schwungradteil 104 und das zweite Schwungradteil 106 relativ zueinander begrenzt axial elastisch verlagerbar sind. Außerdem sind das erste Schwungradteil 104 und das zweite Schwungradteil 106 relativ zueinander begrenzt elastisch verkippbar. Damit können sowohl ein Axialversatz als auch ein Winkelversatz zwischen einer Kurbelwelle und einem Anschlussaggregat 112 ausgeglichen werden.

Das erste Schwungradteil 104 dient zur Verbindung mit einer Kurbelwelle einer Brennkraftmaschine. Das erste Schwungradteil 104 weist eine nabenartige Form mit Durchgangslöchern zur Aufnahme von Verbindungsschrauben, um das Schwungrad 100 mit der Kurbelwelle zu verbinden, und mit Gewindesacklöchern zur Aufnahme von Verbindungsschrauben, wie 114, mit denen das erste Schwungradteil 104 und das Federelement 108 verschraubt sind.

Das zweite Schwungradteil 106 dient zur Verbindung mit dem Anschlussaggregat 112. Das Anschlussaggregat 112 ist vorliegend ein hydrodynamischer Wandler oder ein stufenloses Getriebe. Das zweite Schwungradteil 106 weist eine ringartige Form mit einem L-förmigen Querschnitt auf. Das zweite Schwungradteil 106 weist einen Bodenabschnitt 116 und einen Wandabschnitt 118 auf. In dem Bodenabschnitt 116 sind Durchgangslöcher zur Aufnahme von Verbindungsschrauben, wie 120, angeordnet.

Das Federelement 108 weist eine ringscheibenartige Form mit einem stufigen Querschnitt, einem Innenrandabschnitt und einem Außenrandabschnitt auf. Der Innenrandabschnitt und der Außenrandabschnitt verlaufen zueinander parallel und voneinander axial beabstandet. Der Innenrandabschnitt ist mit dem ersten Schwungradteil 104 fest verschraubt, der Außenrandabschnitt ist mit dem zweiten Schwungradteil 106 verschraubt.

Die Fliehkraftpendeleinrichtung 102 dient dazu, Drehschwingungen zu tilgen, und weist ein Pendelmasseträgerteil 122 sowie Pendelmassen, wie 124, auf, die an dem Pendelmasseträgerteil 122 unter Fliehkrafteinwirkung entlang einer Pendelbahn verlagerbar angeordnete sind. Die Pendelmassen 124 weisen jeweils zwei Pendelmasseteile auf, die miteinander fest verbunden sind. Zur verlagerbaren Anordnung der Pendelmassen 124 an dem Pendelmasseträgerteil 122 dienen Pendelrollen, wie 126. Das Pendelmasseträgerteil 122 ist zusammen mit dem Federelement 108 mit dem ersten Schwungradteil 104 verschraubt.

Die in dem Bodenabschnitt 116 angeordneten Durchgangslöcher zur Aufnahme der Verbindungsschrauben 120 angeordnet sind axial zugänglich, um eine Montage bzw. Demontage des Anschlussaggregats 112 zu ermöglichen. Vorliegend sind die Durchgangslöcher zur Aufnahme der Verbindungsschrauben 120 zumindest im Wesentlichen radial außerhalb der Fliehkraftpendeleinrichtung 102 angeordnet und das Pendelmasseträgerteil 122 weist mit den Durchgangslöchern zur Aufnahme der Verbindungsschrauben 120 korrespondierende Ausnehmungen, wie 128, auf.

Der Wandabschnitt 118 umgreift die Fliehkraftpendeleinrichtung 102 radial außenseitig und bildet einen Berstschutz.

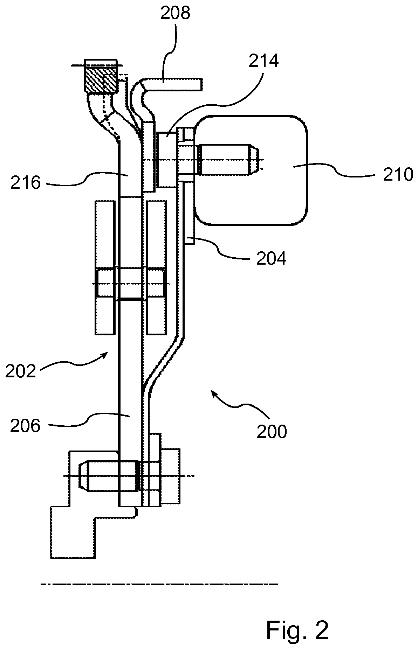

Fig. 2 zeigt ebenfalls ein axial flexibles Schwungrad 200 mit einer Fliehkraftpendeleinrichtung 202 für einen Antriebsstrang eines brennkraftmaschinengetriebenen Kraftfahrzeugs.

Bei dem Schwungrad 200 ist das zweite Schwungradteil 204 ringscheibenartig eben ausgeführt. An dem Pendelmasseträgerteil 206 ist ein Ansatzring 208 angeordnet, der die Verbindung zu dem Anschlussaggregat 210 radial außenseitig umgreift. Das Schwungrad 200 weist radial außenseitig einen Zahnkranz/Geberring 212 auf. Die Durchgangslöcher zur Aufnahme der Verbindungsschrauben 214 sind axial zugänglich, um eine Montage bzw. Demontage des Anschlussaggregats 210 zu ermöglichen. Vorliegend erstreckt sich das Pendelmasseträgerteil 206 nach radial außen über die Durchgangslöcher zur Aufnahme der Verbindungsschrauben 214 hinaus und weist mit den Durchgangslöchern korrespondierende Ausnehmungen, wie 216, auf. Im Übrigen wird ergänzend insbesondere auf Fig. 1 und die zugehörige Beschreibung verwiesen.

### Bezugszeichenliste

- 100: Schwungrad
- 102: Fliehkraftpendeleinrichtung
- 104: erstes Schwungradteil
- 106: zweites Schwungradteil
- 108: Federelement
- 110: Drehachse
- 112: Anschlussaggregat
- 114: Verbindungsschraube
- 116: Bodenabschnitt
- 118: Wandabschnitt
- 120: Verbindungsschraube
- 122: Pendelmasseträgerteil
- 124: Pendelmasse
- 126: Pendelrolle
- 128: Ausnehmung

- 200: Schwungrad
- 202: Fliehkraftpendeleinrichtung
- 204: zweites Schwungradteil
- 206: Pendelmasseträgerteil
- 208: Ansatzring
- 210: Anschlussaggregat
- 212: Zahnkranz/Geberring
- 214: Verbindungsschraube
- 216: Ausnehmung

## Patentansprüche

1. Schwungrad (100, 200), insbesondere für einen Antriebsstrang eines brennkraftmaschinengetriebenen Kraftfahrzeugs, das Schwungrad (100, 200) aufweisend ein erstes Schwungradteil (104), ein zweites Schwungradteil (106, 204) und eine zwischen dem ersten Schwungradteil (104) und dem zweiten Schwungradteil (106, 204) wirksame Axialfedereinrichtung (108), wobei das Schwungrad (100, 200) eine Fliehkraftpendeleinrichtung (102, 202) mit einem Pendelmasseträgerteil (122, 206) und wenigstens einer an dem Pendelmasseträgerteil (122, 206) unter Fliehkrafteinwirkung entlang einer Pendelbahn verlagerbar angeordnete Pendelmasse (124) aufweist, **dadurch gekennzeichnet, dass** das Schwungrad (200) einen Zahnkranz/Geberring (212) aufweist, wobei der Zahnkranz/Geberring (212) an dem Pendelmasseträgerteil (206) angeordnet ist.

2. Schwungrad (100, 200) nach Anspruch 1, **dadurch gekennzeichnet, dass** das erste Schwungradteil (104) zur Verbindung mit einer Kurbelwelle einer Brennkraftmaschine und das zweite Schwungradteil (106, 204) zur Verbindung mit einem Anschlussaggregat (112, 210), insbesondere einem hydrodynamischen Wandler oder einem stufenlosen Getriebe, dient.

3. Schwungrad (100, 200) nach wenigstens einem der vorhergehenden Ansprüche, **dadurch gekennzeichnet, dass** die Fliehkraftpendeleinrichtung (102, 202) an dem ersten Schwungradteil (104) angeordnet ist.

4. Schwungrad (100, 200) nach wenigstens einem der vorhergehenden Ansprüche, **dadurch gekennzeichnet, dass** die Axialfedereinrichtung (108) mit dem ersten Schwungradteil (104) fest verbunden, insbesondere verschraubt, ist und das Pendelmasseträgerteil (122, 206) zusammen mit der Axialfedereinrichtung (108) mit dem ersten Schwungradteil (104) fest verbunden, insbesondere verschraubt, ist.

5. Schwungrad (100, 200) nach wenigstens einem der vorhergehenden Ansprüche, **dadurch gekennzeichnet, dass** das zweite Schwungradteil (106, 204) Ausnehmungen zur Aufnahme von Verbindungselementen (120, 214) aufweist und die Ausnehmungen axial zugänglich sind.

6. Schwungrad (100) nach Anspruch 5, **dadurch gekennzeichnet, dass** die Ausnehmungen des zweiten Schwungradteils (106) zumindest im Wesentlichen radial außerhalb der Fliehkraftpendeleinrichtung (102, 202) angeordnet sind.

7. Schwungrad (100, 200) nach Anspruch 5, **dadurch gekennzeichnet, dass** das Pendelmasseträgerteil (122, 206) und/oder die wenigstens eine Pendelmasse (124) mit den Ausnehmungen des zweiten Schwungradteils (106, 204) korrespondierende Ausnehmungen aufweisen/aufweist.

8. Schwungrad (100) nach wenigstens einem der vorhergehenden Ansprüche, **dadurch gekennzeichnet, dass** das zweite Schwungradteil (106) einen Abschnitt aufweist, der die Fliehkraftpendeleinrichtung (102, 202) radial außenseitig umgreift.

## Claims

1. A flywheel (100, 200), in particular for a drive train of an internal combustion engine-powered motor vehicle, the flywheel (100, 200) having a first flywheel part (104), a second flywheel part (106, 204) and an axial spring device (108) active between the first flywheel part (104) and the second flywheel part (106, 204), wherein the flywheel (100, 200) has a centrifugal pendulum device (102, 202) with a pendulum mass carrier part (122, 206) and at least one pendulum mass (124) arranged on the pendulum mass carrier part (122, 206) such that it can be displaced along a pendulum path under the effect of a centrifugal force, **characterised in that** the flywheel (200) has a ring gear/transducer ring (212), wherein the ring gear/transducer ring (212) is arranged on the pendulum mass carrier part (206).

2. The flywheel (100, 200) according to claim 1, **characterised in that** the first flywheel part (104) is used for connecting to a crankshaft of an internal combustion engine and the second flywheel part (106, 204) is used for connecting to a connection unit (112, 210), in particular a hydrodynamic converter or a continuously variable transmission.

3. The flywheel (100, 200) according to at least one of the preceding claims, **characterised in that** the centrifugal pendulum device (102, 202) is arranged on the first flywheel part (104).

4. The flywheel (100, 200) according to at least one of the preceding claims, **characterised in that** the axial spring device (108) is firmly connected, in particular screwed, to the first flywheel part (104), and the pendulum mass carrier part (122, 206) together with the axial spring device (108) is firmly connected, in particular screwed, to the first flywheel part (104).

5. The flywheel (100, 200) according to at least one of the preceding claims, **characterised in that** the second flywheel part (106, 204) has recesses for receiving connecting elements (120, 214) and the recesses are axially accessible.

6. The flywheel (100) according to claim 5, **characterised in that** the recesses of the second flywheel part (106) are arranged at least substantially radially outside of the centrifugal pendulum device (102, 202).

7. The flywheel (100, 200) according to claim 5, **characterised in that** the pendulum mass carrier part (122, 206) and/or the at least one pendulum mass (124) has recesses corresponding to the recesses of the second flywheel part (106, 204).

8. The flywheel (100) according to at least one of the preceding claims, **characterised in that** the second flywheel part (106) has a section which surrounds the centrifugal pendulum device (102, 202) radially on the outside.

## Revendications

1. Volant d'inertie (100, 200), en particulier pour une chaîne cinématique d'un véhicule automobile entraîné par un moteur à combustion interne, le volant d'inertie (100, 200) présentant une première partie de volant d'inertie (104), une seconde partie de volant d'inertie (106, 204) et un dispositif à ressort axial (108) opérant entre la première partie de volant d'inertie (104) et la seconde partie de volant d'inertie (106, 204), le volant d'inertie (100, 200) présentant un dispositif pendulaire à force centrifuge (102, 202) avec une partie support de masse pendulaire (122, 206) et au moins une masse pendulaire (124) disposée de manière à pouvoir se déplacer sur la partie support de masse pendulaire (122, 206) sous l'action de la force centrifuge le long d'une voie pendulaire, **caractérisé en ce que** le volant d'inertie (200) présente une couronne dentée/bague émettrice (212), la couronne dentée/bague émettrice (212) étant disposée sur la partie support de masse pendulaire (206).

2. Volant d'inertie (100, 200) selon la revendication 1, **caractérisé en ce que** la première partie de volant d'inertie (104) sert de liaison à un vilebrequin d'un moteur à combustion interne et la seconde partie de volant d'inertie (106, 204) sert de liaison à un organe de raccordement (112, 210), en particulier à un convertisseur hydrodynamique ou à une transmission à variation continue.

3. Volant d'inertie (100, 200) selon au moins l'une des revendications précédentes, **caractérisé en ce que** le dispositif pendulaire à force centrifuge (102, 202) est disposé sur la première partie de volant d'inertie (104).

4. Volant d'inertie (100, 200) selon au moins l'une des revendications précédentes, **caractérisé en ce que** le dispositif à ressort axial (108) est solidaire, en particulier vissé, à la première partie de volant d'inertie (104) et la partie support de masse pendulaire (122, 206), conjointement avec le dispositif à ressort axial (108), est solidaire, en particulier vissée, à la première partie de volant d'inertie (104).

5. Volant d'inertie (100, 200) selon au moins l'une des revendications précédentes, **caractérisé en ce que** la seconde partie de volant d'inertie (106, 204) présente des évidements pour recevoir des éléments de liaison (120, 214) et les évidements sont accessibles axialement.

6. Volant d'inertie (100) selon la revendication 5, **caractérisé en ce que** les évidements de la seconde partie de volant d'inertie (106) sont disposés au moins sensiblement radialement à l'extérieur du dispositif pendulaire à force centrifuge (102, 202).

7. Volant d'inertie (100, 200) selon la revendication 5, **caractérisé en ce que** la partie support de masse pendulaire (122, 206) et/ou l'au moins une masse pendulaire (124) présentent des évidements correspondant aux évidements de la seconde partie de volant d'inertie (106, 204).

8. Volant d'inertie (100) selon au moins l'une des revendications précédentes, **caractérisé en ce que** la seconde partie de volant d'inertie (106) présente une section qui entoure le dispositif pendulaire à force centrifuge (102, 202) radialement à l'extérieur.
